(19) **Europäisches Patentamt / European Patent Office / Office européen des brevets**

(11) **EP 3 452 778 B1**

(12) **EUROPEAN PATENT SPECIFICATION**

(45) Date of publication and mention
of the grant of the patent:
**08.01.2020 Bulletin 2020/02**

(21) Application number: **17721173.7**

(22) Date of filing: **05.05.2017**

(51) Int Cl.:
***G01B 11/22*** *(2006.01)* ***H05B 37/02*** *(2006.01)*

(86) International application number:
**PCT/EP2017/060801**

(87) International publication number:
**WO 2017/191311 (09.11.2017 Gazette 2017/45)**

(54) **SYSTEM AND METHOD FOR AUTOMATED LUMINAIRE DETECTION AND CLASSIFICATION**

SYSTEM UND VERFAHREN ZUR AUTOMATISIERTEN LEUCHTENDETEKTION UND -KLASSIFIZIERUNG

SYSTÈME ET PROCÉDÉ DE DÉTECTION ET CLASSIFICATION DE LUMINAIRE AUTOMATISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2016 US 201662332712 P**
**10.06.2016 EP 16174028**

(43) Date of publication of application:
**13.03.2019 Bulletin 2019/11**

(73) Proprietor: **Signify Holding B.V.**
**5656 AE Eindhoven (NL)**

(72) Inventors:
• **HAN, Dong**
**5656 AE Eindhoven (NL)**
• **GU, Yun**
**5656 AE Eindhoven (NL)**

• **BRANDÃO DE OLIVEIRA, Talmai**
**5656 AE Eindhoven (NL)**
• **MURTHY, Abhishek**
**5656 AE Eindhoven (NL)**
• **ZIEMBIENSKI, Daniel, Edward**
**5656 AE Eindhoven (NL)**
• **JIANG, Dan**
**5656 AE Eindhoven (NL)**
• **MOHANNA, Hassan**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**EP-A1- 1 953 568    US-A1- 2014 063 489**
**US-B1- 9 234 618**

## Description

### BACKGROUND

Municipal lighting audits entail the collection of many attributes of light poles, such as geo-location, the lamp and luminaire type, pole condition, and the height of the lighting fixture. Often, this is visually inferred based on past experience of the auditor. Moreover, the entire process is manual, and therefore slow and unscalable.

EP 1 953 568 (Bosch GMBH Robert 6 August 2008 (2008-08-06) teaches an imager-semiconductor component that comprises two-dimensional integrated arrangement of imager-pixels for receiving an optical or infrared radiation and emission of picture signals. Measuring-cells are provided, which are integrated on the semiconductor component for determining a distance by measuring travelling time of the optical or infrared radiation.

### SUMMARY

The exemplary embodiments relate to a system for automated luminaire detection.

According to an aspect of the present disclosure, the system detects a luminaire height. The system comprises an infrared recording component configured to capture a plurality of infrared images, a depth recording component configured to capture a plurality of depth images and a processing device. The processing device configured to identify a luminaire in at least one of the infrared images, correlate the identified luminaire to at least one of the depth images, and determine the height of the luminaire based on the at least one of the depth images.

In another aspect of the system, the infrared recording component and the depth recording component are one of synchronized to capture their respective images simultaneously or the respective images are captured at a rate independent of each other.

In another aspect, the system further comprises a memory that stores the plurality of the depth images and the plurality of the infrared images. A bounding box may be superimposed on a portion of an infrared image from the plurality of infrared images. Further, the correlation may be based on one of timestamps or GPS coordinates.

In another aspect, the system further comprises a further depth recording component configured to capture a further plurality of depth images. The processor may determine the height of the luminaire based on a measured-out ceiling grid that is generated based from at least one of the plurality of depth images or of the further plurality of depth images.

### BRIEF DESCRIPTION

Fig. 1 shows a shows a Luminaire Information Collection system, according to exemplary embodiments.
Fig. 2 shows a processing device of Fig. 1, according to exemplary embodiments.
Fig. 3 shows a flow diagram of a method for obtaining a height of a luminaire, according to exemplary embodiments.
Fig. 4 shows a measure area, according to exemplary embodiments.
Fig. 5 shows a dual depth camera setup, according to exemplary embodiments.
Fig. 6 shows a measured-out ceiling grid, according to exemplary embodiments.
Fig. 7 shows a flow diagram of a method for detecting and identifying a luminaire cluster, according to exemplary embodiments.
Fig. 8 shows an example of comparing matching points, according to exemplary embodiments.
Fig. 9 shows spectral power distributions, according to exemplary embodiments.

### DETAILED DESCRIPTION

The exemplary embodiments may be further understood with reference to the following description and the appended drawings wherein like elements are referred to with the same reference numerals. The exemplary embodiments relate to a system and method for automated detection of a luminaire.

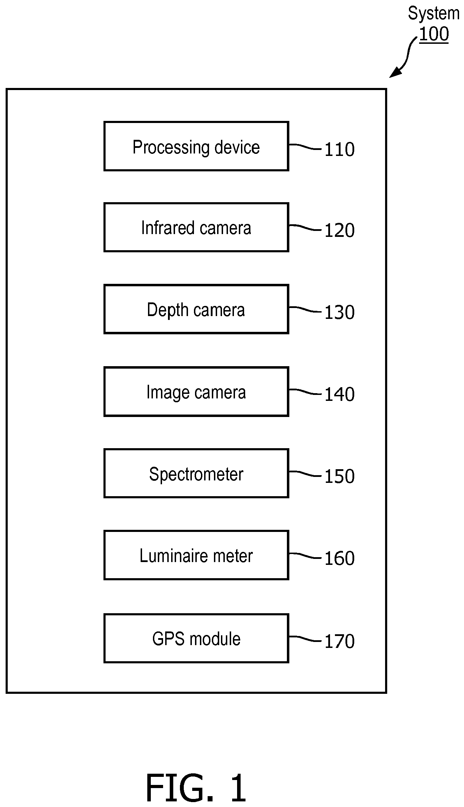

Fig. 1 shows a Luminaire Information Collection (LIC) system 100 according to exemplary embodiments. The LIC system 100 may include the following components: a processing device 110, an infrared camera 120, a depth camera 130, an image camera 140, a spectrometer 150, a luminaire meter 160 and a global positioning system (GPS) module 170. It will be understood by those of skill in the art the LIC system 100 can utilize any combination of the above-disclosed components and may also include additional components. The processing device 110 may be connected to the remaining components. In an exemplary embodiment, the components are mounted on and/or in a motor vehicle. For example, the infrared camera 120 and the depth camera 130 may be mounted on a roof of the motor vehicle.

The processing device 110 may be any type of computing device, such as a personal computer, tablet, smartphone, or other electronic device that can be used to record data. The infrared camera 120 may be any type of thermographic camera, such as those that form an image (e.g. an infrared image) using infrared radiation instead of visible light. The depth camera 130 may be any type of range-based imaging device used to resolve the distance between the depth camera 130 and an object(s). This may be done by measuring each pixel in a depth image, although other methods may be utilized.

The image camera 140 may be any type of photographic camera, such as those capable of capturing photographic images. The spectrometer 150 may be any type of device capable of measuring a spectrum, such as a graph that shows intensity as a function of wavelength. In particular, the spectrometer may be utilized to record measurement pertaining to the luminaire. The luminaire meter 160 may be any type of device capable of measuring a lux (or luminance eminence), a color, a temperature, a wavelength spectrum, a color renditioning index, and/or chromaticity coordinates of the luminaire. The GPS module 170 may be any type of device capable of accurately calculating a geographical location by utilizing information of GPS satellites. In particular, the GPS module may produce GPS coordinates of a measurement or an image recorded by any of the LIC components. For example, upon or after capture, the infrared image capture by the infrared camera 120 may be tagged with GPS coordinates. Other locations may also be used. In should be noted that any of the measurements or the images recorded by any of the LIC components may also be tagged with a timestamp, a date, etc.

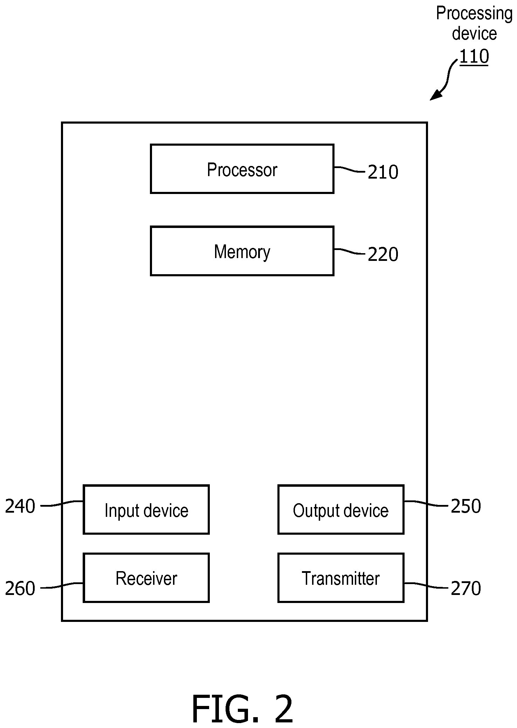

Fig. 2 shows the processing device 110 of Fig. 1 according to exemplary embodiments. The processing device 110 includes a processor 210, a memory 220, an input device 240, an output device 250, a receiver 260 and a transmitter 270.

The processor 210 may engage the LIC system 100 components to perform data collection. The memory 220 stores the data collected by the LIC system components as well as other data, such as but not limited to, the timestamp, the date, an elevation of the infrared camera 120 and/or the depth camera 130, etc.

The input device 240 may receive inputs from the user and includes a keyboard, a mouse, a touch screen and/or other input devices. Further, the input device 240 may receive inputs from the LIC system 100 components. The output device 250 may communicate data to the user via a monitor, a printer and/or other output devices. The receiver 260 and the transmitter 270 may be utilized for wired and/or wireless communications such as with a communications network. In an exemplary embodiment, a combined transceiver may be utilized to provide the functionalities of the receiver 260 and transmitter 270.

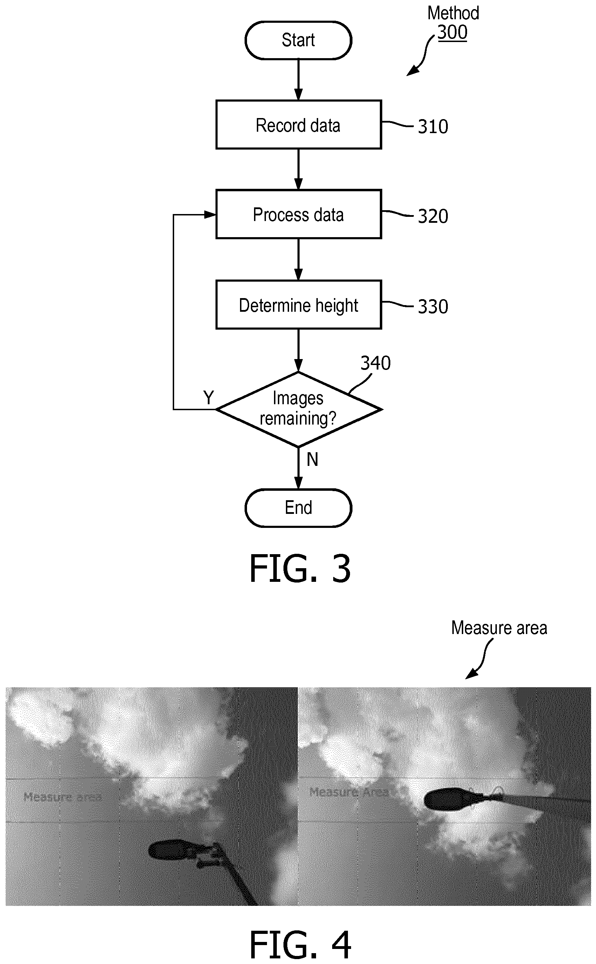

Fig. 3 shows the method 300 for obtaining a height of the luminaire, according to exemplary embodiments. The height of the luminaire may be the height between a road (or a ground) and the luminaire. The method 300 will be described with regards to the LIC system 100 of Fig 1. The components utilized by method 300 may include, at least, the processing device 110, the infrared camera 120 and the depth camera 130. Further, the infrared camera 120 and depth camera 130 may be set to face vertically upwards and have a same range of view.

In step 310, the LIC system 100 records data collected by the infrared camera 120 and the depth camera 130. Specifically, the motor vehicle mounted with the LIC system 100 may drive along on the road. The infrared camera 120 may continuously capture the infrared images while the depth camera 130 continuously captures the depth images. The infrared camera 120 and the depth camera 130 may be synced to capture their respective images simultaneously. Alternatively, the infrared camera 120 and the depth camera 130 may capture their respective images at different rates.

Various methods for determining a rate of capture of the infrared images and depth images may be implemented. In one exemplary embodiment, the rate of capture may be set to a specified time interval. In a different exemplary embodiment, the rate of capture may be set to correlate with the velocity of the motor vehicle. For example, the rate of capture may be set to linearly or exponentially increase and decrease dependent on the velocity of the motor vehicle. In yet another exemplary embodiment, the rate of capture may be set to 0 if the motor vehicle is stationary, such as at a stop light or in a traffic jam.

In a further exemplary embodiment, the infrared camera 120 may be set to capture the infrared images when a heat signature is detected. As such, the depth camera 130 may be configured to take the depth images in response to actions of the infrared camera 120. For example, the depth camera 130 may be configured to capture the depth images at a simultaneous time as the infrared camera 120 captures the infrared images or on a specified time delay. Additionally, a ratio may be set regarding an amount of the infrared images captured to the amount of the depth images captured. For example, for every one of the infrared images captured, two depth images may be captured.

While preferable, in method 300, for the motor vehicle to drive during nighttime, the LIC system 100 can record data at any time of day as long as the luminaires are producing a heat signature. The infrared images and the depth images captured may be stored in the memory 220.

In step 320, the recorded data of step 310 (e.g. the infrared images and the depth images) is processed. While exemplary embodiments will make reference to this step and further steps of method 300 as being performed by the processor 210, is should be noted that the recorded data may be processed by a further processing unit. For example, the recorded data may be transferred from the memory 220 of the processing unit 110 to the further processing unit.

In an exemplary embodiment, the processing may comprise identifying the presence of the luminaire in the infrared image. As discussed above, this may be done by detecting infrared radiation in the infrared image. If no luminaire is detected, the processor 210 may proceed to the next infrared image. If the luminaire is detected, the processor 210 may further determine whether the luminaire is the same as a luminaire identified in a different infrared image. If the same luminaire is identified, the processor 210 may, again, proceed to the next infrared image. Infrared images with no detected luminaire may be discarded.

In exemplary embodiments, a bounding box may be utilized on a portion of the infrared image identified to be the luminaire. The bounding box may be a point set that fully encloses an area in the infrared image. For example, after detecting the heat signature in the infrared image, a bounding box may be superimposed to enclose the heat signature. As will be further explained below, a similar bounding box may then be superimposed in a similar location on a correlating depth image(s). By utilizing the bounding box, the amount of processing needed would be reduced since only the enclosed portion of the depth image(s) will need to be analyzed.

The processing may further comprise correlating the infrared image with the detected luminaire to the depth image(s). This may be done by using the timestamp or the GPS coordinates. Once the infrared image(s) and the depth image(s) are correlated, the bounding box may be also be imposed onto the depth image. In particular, if the infrared image and the depth image were captured at the same or nearly the same time, then the bounding box may be placed at the same position on the depth image as it was placed on the infrared image. In an alternative exemplary embodiment, the placement of the bounding box in the depth image may be appropriately shifted with respect to the placement of the bounding box on the infrared image to account for different placements of the infrared camera 120 and the depth camera 130, different fields of view by the infrared camera 120 and the depth camera 130, differences in time of capture and/or a speed of the vehicle at the time of capture, etc.

In a further exemplary embodiment, the accuracy of the identifying may be improved. In particular, the depth camera 130 may be mounted at a 45° angle, such that the depth camera 130 faces upwards as well as laterally. If the luminaire is detected in the infrared image, the processor 210 may verify whether a structural object is attached to the luminaire in the correlated depth image. In additional, the processor may verify whether the structural object extends to a street side view in the correlated depth image. It will be understood by those of skill in the art that a further depth camera may be used in this embodiment instead of the depth camera 130 being mounted at a 45° angle. It will also be understood by those skilled in the art that the angle of mounting for any embodiment may be altered for optimal measurements.

In step 330, the LIC system 100 determines the height of the luminaire. The height of the luminaire may be determined by combining the measured height between the road/ground and the depth camera 130 with a vertical height between the depth camera 130 and the luminaire. The vertical height may be measured or calculated.

In one exemplary embodiment, if the motor vehicle is able to drive either directly underneath or relatively close to the luminaire, the distance measured by the depth camera 130 is determined to be the vertical height. In order to increase the accuracy of the vertical height, a measure area, as seen in Fig. 4, may be utilized. The measure area is a constraint imposed on the depth image, such as two parallel lines equidistantly offset from the center of the depth image. The vertical height would be determined when the luminaire is within the measure area. Thus, a more accurate vertical height is determined because the measure area would be directly above a center of the depth camera 130.

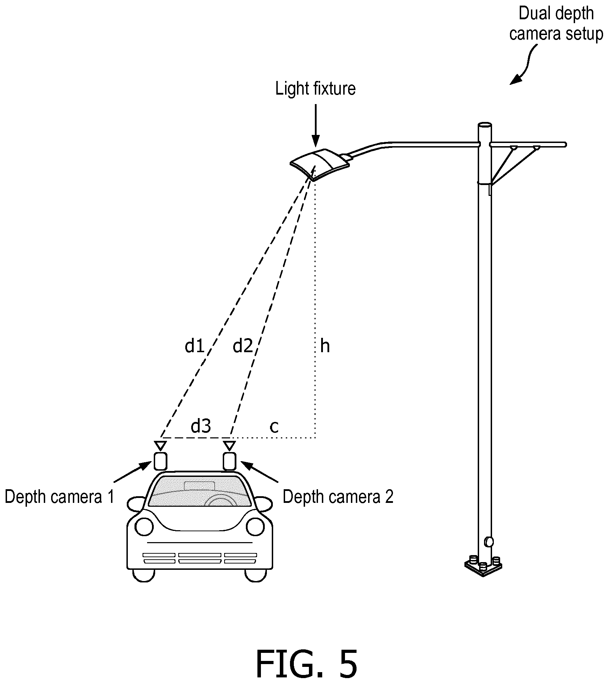

In an alternate embodiment, as seen in Fig. 5, a first depth camera 130a and a second depth camera 130b may be used to determine the vertical height. A distance between the luminaire and the first depth camera 130a (d1) and a distance between the luminaire and the second depth camera 130b (d2) is recorded during step 310. Additionally, a distance between the first depth camera 130a and the second depth camera 130b (d3) are also measured and recorded. Each of the d1, d2 and d3 are then plugged into the following formulas:

$$d1^2 = (d3 + c)^2 + h^2$$

$$d2^2 = c^2 + h^2$$

With d1, d2 and d3 being known values, the processor 210 can calculate the values of c and h from the above formulas. The value of h would be the vertical height. The measured vertical height between the road/ground may be, either, but not limited to, the height of the first depth camera 130a, the height of the second depth camera 130b or an average of their respective heights. This method may be used when driving directly underneath or relatively close to the luminaire is not feasible.

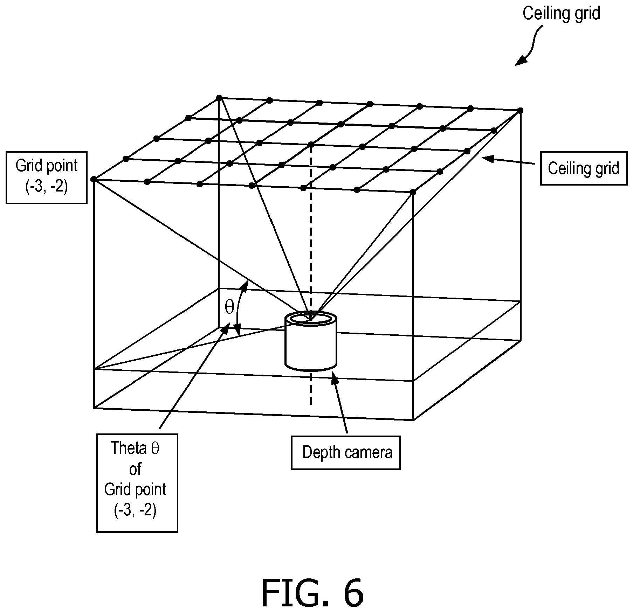

In yet another embodiment, as seen in as seen in Fig. 6, a third method may be used to determine the vertical height between the depth camera 130 and the luminaire. Specifically, the depth camera 130 may be calibrated to a fixed setting or maintain a fixed lens. As such, each pixel in the depth image will have a known angle offset from a pixel in the center of the image.

By utilizing a measured-out ceiling grid on the depth image, an angle of each pixel can be determined. The ceiling grid may contain grid coordinates and be of a predetermined height. It should be noted that the resolution may be improved by narrowing a spacing between the grid coordinates. The angle offset of each of the grid coordinates may be determined through the following function:

$$\theta = \tan^{-1}(z/r)$$

wherein:

r = a radius length along a horizontal plane from an origin to grid coordinates.

z = a vertical z-axis height of the grid coordinates.

θ = an angle formed by the horizontal plane and a line of sight to the grid coordinates.

The calculated θ is then inserted into formula z = sin(θ) * d. The variable d is the measurement taken by the depth camera 130. The resulting variable z produces the vertical height.

In step 340, the LIC system 100 determines if there is any remaining data available for processing. If there is, the method proceeds to step 320 in order to continue processing the data. If there are no images remaining, the method may end.

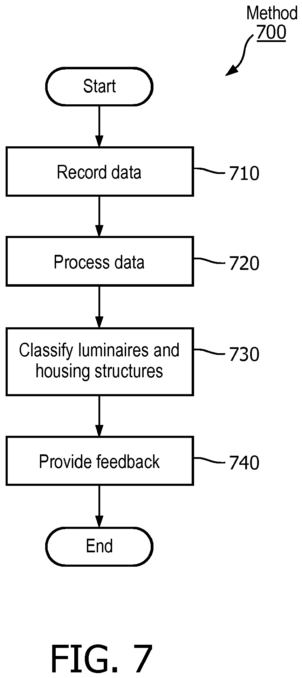

Fig. 7 shows the method 700 for detecting and identifying a luminaire cluster. The luminaire cluster may be a plurality of luminaires of a same class or a plurality of luminaire housing structures of a same type. In an alternate exemplary embodiment, the luminaire cluster may be a plurality of the luminaire housing structures of the same type with luminaires of a single class. The method 700 will be described with regards to the LIC system 100 of Fig 1. The LIC system components utilized by method 700 may include, but not be limited to, the processing unit 110, the image camera 140, the spectrometer 150 and the GPS module 170. The image camera 140 may be utilized to capture photographic images of the luminaire housing structures while the spectrometer 150 may be utilized to record wavelength measurements of the luminaires with the luminaire housing structures.

In step 710, the LIC system 100 records data collected by the image camera 140, the spectrometer 150 and the GPS module 170. Specifically, the motor vehicle mounted with the LIC system 100 may drive along on the road. The image camera 140 may continuously capture the photographic images while the spectrometer 150 records the wavelength measurements. Further, the GPS module 170 may record the GPS coordinates of each of the photographic images captured and/or each of the wavelength measurements recorded. The image camera 140 and the spectrometer 150 may be synced to capture/record their respective images and measurements simultaneously. Alternatively, the image camera 140 and the spectrometer 150 may capture/record their respective images and measurements at different rates.

In an exemplary embodiment, the capturing of the photographic images and the recording of the wavelength measurements may be conducted at separate times. Specifically, the photographic images may be captured during daytime. This would provide for improved detail of the photographic images. This would further negate a need for a flash device, as compared to capturing the photographic images during the nighttime. On the other hand, the recording of wavelength measurements may be conducted during nighttime. This would ensure that the luminaires are turned on and emitting their respective wavelengths. As disclosed above, the GPS module 170 may record the GPS coordinates of each of the photographic images captured and each of the wavelength measurement recorded.

Similar to step 310, various methods for determining a rate of capture of the photographic images and a rate of recordation of the wavelength measurements may be used. In one exemplary embodiment, the rate of capture of the photographic images may be set to a specified time interval. In a different exemplary embodiment, the rate of capture of the photographic images may be set to correlate with the velocity of the motor vehicle. For example, the rate of capture of the photographic images may be set to linearly or exponentially increase and decrease dependent on the velocity of the motor vehicle. In yet another exemplary embodiment, the rate of capture of the photographic images may be set to 0 if the motor vehicle is stationary, such as at a stop light or in traffic. It will be understood by those of skill in the art that similar methods may be applied for the rate of recordation of the wavelength measurements. In an alternate exemplary embodiment, the luminaire meter 160 may be used instead of the spectrometer 150.

In step 720, the recorded data of step 710 (e.g. the photographic images and the spectrometer measurements) is processed. While exemplary embodiments will make reference to this step and further steps in method 700 as being performed by the processor 210, is should be noted that the recorded data may be processed by the further processing unit.

In an exemplary embodiment, the processing may comprise detecting the luminaire housing structure from the photographic images. Specifically, a procedure may be utilized to detect a subset of pixels in each of the photographic images that correspond to the luminaire housing structure. Each of the photographic images that are determined to possess the luminaire housing structure may remain stored for further processing while each of the photographic images that are determined to not possess the luminaire housing structure may be discarded. The procedure utilized for detecting the luminaire housing structures may be a Cascade object detector, a Viola-Jones algorithm or may rely on Haar features.

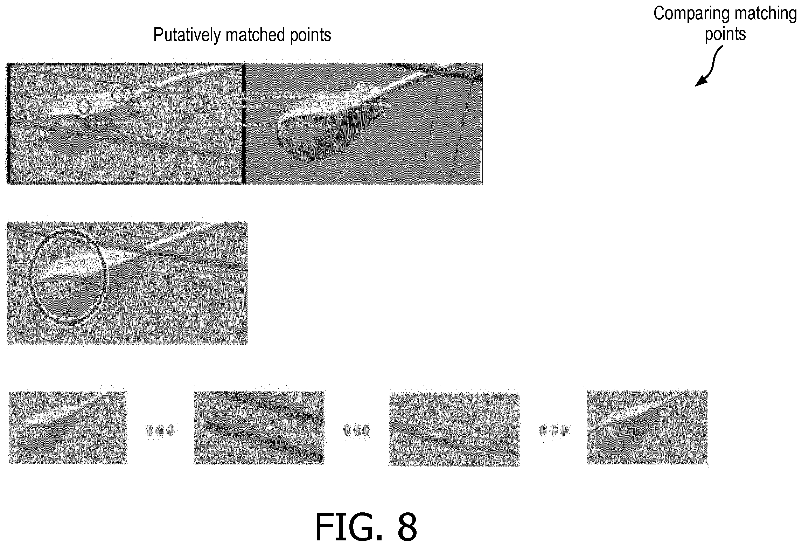

The processing may further comprise grouping luminaire housing structure types. Specifically, a candidate image of a luminaire housing structure type may be selected from the photographic images. Remaining photographic images may be compared to the candidate image. For example, a score may be assigned to each of the remaining photographic images based on a number of matching points, as seen in Fig. 8. If the number of matching points of the photographic image is above a threshold, then the photographic image is grouped with the candidate image. In the photographic image fails to attain the threshold, then the photographic image remains stored. The photographic images that failed to attain the threshold may then be compared to a different candidate image of a different luminaire housing structure type.

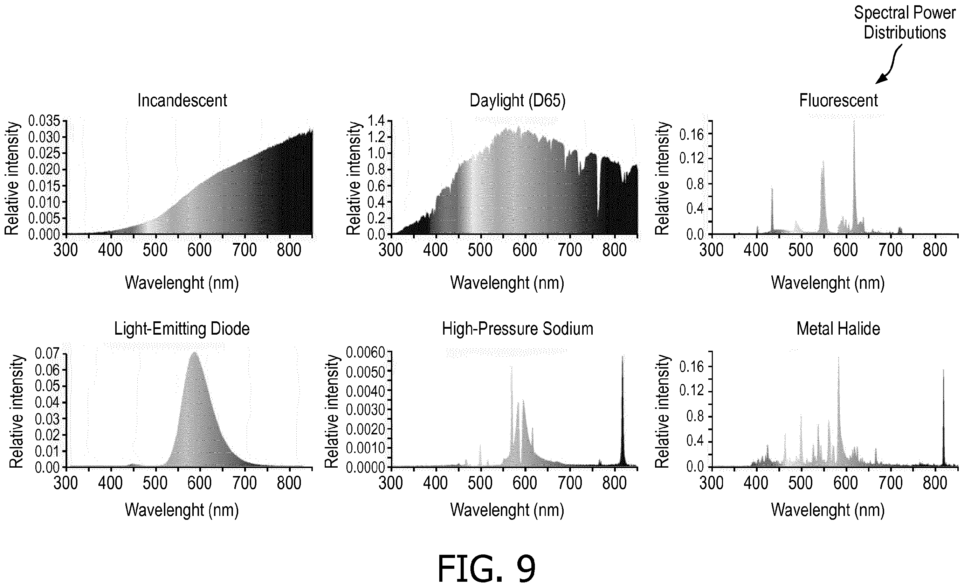

The processing may also comprise identifying the presence of the luminaire type from the spectrometer measurements. This may be done by comparing the intensity of the wavelengths from the spectrometer measurements to a spectral power distribution. For example, as seen in Fig. 9, the spectrometer measurements may be compared to a plurality of the spectral power distributions. If the spectrometer measurements of the luminaire match or resemble a certain spectral power distribution, the spectrometer measurements may be labeled and remain stored for further processing. If the spectrometer measurements of the luminaire do not match or resemble any of the plurality of the spectral power distribution, the spectrometer measurements may are discarded.

Remaining spectrometer measurements may then be correlated to the respective photographic images, forming a compilation. In an exemplary embodiment, the correlating may be accomplished by matching the GPS coordinates of the spectrometer measurement to the photographic image. In another exemplary embodiment, the correlating may be accomplished by utilizing the timestamps.

It will be understood by those skilled in the art that the GPS coordinates may be used to eliminate identifying the presence of either the luminaire or the luminaire housing structure in their respective measurements/photographic images. In particular, if the photographic images are processed, the GPS coordinates may be used to eliminate spectrometer measurements in locations that were determined to not contain any luminaire housing structures, and vice-versa. This would reduce the amount of processing required.

In an exemplary embodiment, the grouped luminaire housing structure types may be further organized into subgroups. Specifically, the groups of luminaire housing structure types may be organized into the subgroups based on their correlating spectrometer measurements. For example, a group one, which contains photographic images of a luminaire housing structure type 1, may be split into subgroup 1 and subgroup 2, with subgroup 1 containing luminaire housing structure types having a first type of the luminaire and subgroup 2 containing luminaire housing structure types having a second type of the luminaire. Each of the groups and/or the subgroups may be identified as one of the plurality of clusters and assigned an identification number.

In step 730, the groups and/or subgroups may be classified. Specifically, a classification algorithm may be utilized to cycle thought the groups and/or subgroups and assign a classification indicative of the luminaire class and the luminaire housing structure type. For example, the algorithm may indicate that the luminaire class is one of a tungsten incandescent class, a mercury fluorescent class, a low-pressure sodium class, a high-pressure sodium class or a metal halide class. It will be understood by those of skill in the art the above luminaire class list is not exhaustive and that other luminaire classes may be included. In another exemplary embodiment, a person may be used to cycle thought the groups and/or subgroups and assign the classification indicative of the luminaire class and the lamp type. In particular, the person may be an expert capable of quickly identifying the group and/or subgroup.

Either the classification algorithm or the person may identify an improperly labeled compilation, group or subgroup. For example, a determination may be made that the compilation is not similar to a remainder of the group/subgroup. The non-similar compilation may then be removed from the group and properly identified.

In step 740, a feedback loop may be used to improve accuracy of the method 700. Specifically, the non-similar compilations may be analyzed to determine a reason as to why each of the non-similar compilations was improperly labeled. The process data step 720 may then be modified for improved performance.

Those skilled in the art will understand that the above-described exemplary embodiments may be implanted in any number of manners, including, as a separate software module, as a combination of hardware and software, etc. Further, those skilled in the art will understand that the above-described exemplary embodiments may be used separately or in combination. For example, as shown in Fig. 1, the motor vehicle may be outfitted with any or all of the LIC system 100 components. As such, method 300 and method 700 may be performed simultaneously or separately, as desired.

## Claims

1. A system for detecting a luminaire height, comprising:

    an infrared recording component (120) configured to capture a plurality of infrared images;
    a depth recording component (130) configured to capture a plurality of depth images; and
    a processing device (110) configured to:

        identify a luminaire in at least one of the infrared images, wherein a bounding box relating to the identified luminaire is superimposed on a portion of the at least one infrared image from the plurality of infrared images;
        correlate the bounding box to at least one of the depth images; and
        determine the height of the identified luminaire based on the correlated bounding box and depth image.

2. The system of claim 1, wherein the infrared recording component (120) and the depth recording component (130) are synchronized to capture their respective images simultaneously or the respective images are captured at a rate independent of each other.

**3.** The system of claim 1, further comprising a memory (220) that stores the plurality of the depth images and the plurality of the infrared images.

**4.** The system of claim 1, wherein the correlation is based on one of timestamps or GPS coordinates (170).

**5.** The system of claim 1, further comprising:
a further depth recording component (130) configured to capture a further plurality of depth images.

**6.** The system of claim 5, wherein the processor (110) determines the height of the luminaire based on a measured-out ceiling grid that is generated based from at least one of the plurality of depth images or of the further plurality of depth images.

**Patentansprüche**

**1.** System zum Erfassen einer Leuchtenhöhe, umfassend:

eine Infrarotaufzeichnungskomponente (120), die konfiguriert ist, um eine Vielzahl von Infrarotbildern aufzunehmen;
eine Tiefenaufzeichnungskomponente (130), die konfiguriert ist, um eine Vielzahl von Tiefenbildern aufzunehmen; und
eine Verarbeitungsvorrichtung (110), die konfiguriert ist, um:

eine Leuchte in mindestens einem der Infrarotbilder zu identifizieren, wobei ein Begrenzungsrechteck, das sich auf die identifizierte Leuchte bezieht, auf einem Abschnitt des mindestens einen Infrarotbildes aus der Vielzahl von Infrarotbildern überlagert wird;
das Begrenzungsrechteck mit mindestens einem der Tiefenbilder zu korrelieren; und
die Höhe der identifizierten Leuchte basierend auf dem korrelierten Begrenzungsrechteck und Tiefenbild zu bestimmen.

**2.** System nach Anspruch 1, wobei die Infrarotaufzeichnungskomponente (120) und die Tiefenaufzeichnungskomponente (130) synchronisiert werden, um ihre jeweiligen Bilder gleichzeitig aufzunehmen, oder die jeweiligen Bilder bei einer Rate unabhängig voneinander aufgenommen werden.

**3.** System nach Anspruch 1, weiter umfassend einen Speicher (220), der die Vielzahl der Tiefenbilder und die Vielzahl der Infrarotbilder speichert.

**4.** System nach Anspruch 1, wobei die Korrelation auf einem von Zeitstempeln oder GPS-Koordinaten (170) basiert.

**5.** System nach Anspruch 1, weiter umfassend:
eine weitere Tiefenaufzeichnungskomponente (130), die konfiguriert ist, um eine weitere Vielzahl von Tiefenbildern aufzunehmen.

**6.** System nach Anspruch 5, wobei der Verarbeiter (110) die Höhe der Leuchte basierend auf einem zugemessenen Deckenraster bestimmt, das basierend auf mindestens einer von der Vielzahl von Tiefenbildern oder der weiteren Vielzahl von Tiefenbildern erzeugt wird.

**Revendications**

**1.** Système de détection d'une hauteur de luminaire, comprenant :

un composant d'enregistrement à infrarouge (120) configuré pour capturer une pluralité d'images infrarouges ;
un composant d'enregistrement de profondeur (130) configuré pour capturer une pluralité d'images de profondeur ; et
un dispositif de traitement (110) configuré pour :

identifier un luminaire dans au moins l'une des images infrarouges, dans lequel une zone de délimitation relative au luminaire identifié est superposée sur une portion de l'au moins une image infrarouge parmi la pluralité d'images infrarouges ;
corréler la zone de délimitation à au moins une des images de profondeur ; et déterminer la hauteur du luminaire identifié d'après la zone de délimitation et l'image de profondeur corrélées.

**2.** Système selon la revendication 1, dans lequel le composant d'enregistrement à infrarouge (120) et le composant d'enregistrement de profondeur (130) sont synchronisés pour capturer leurs images respectives simultanément ou bien les images respectives sont capturées à une cadence indépendante l'une de l'autre.

**3.** Système selon la revendication 1, comprenant en outre une mémoire (220) qui stocke la pluralité des images de profondeur et la pluralité des images infrarouges.

**4.** Système selon la revendication 1, dans lequel la corrélation est basée sur l'une d'estampilles temporelles ou de coordonnées GPS (170).

5. Système selon la revendication 1, comprenant en outre :
un composant d'enregistrement de profondeur supplémentaire (130) configuré pour capturer une pluralité supplémentaire d'images de profondeur.

6. Système selon la revendication 5, dans lequel le processeur (110) détermine la hauteur du luminaire d'après un élément plafonnier mesuré qui est généré d'après au moins une de la pluralité d'images de profondeur ou de la pluralité supplémentaire d'images de profondeur.

System
100

Processing device —— 110

Infrared camera —— 120

Depth camera —— 130

Image camera —— 140

Spectrometer —— 150

Luminaire meter —— 160

GPS module —— 170

# FIG. 1

Processing
device
<u>110</u>

Processor —210

Memory —220

240— Input device Output device —250

260— Receiver Transmitter —270

# FIG. 2

Method
300

Start

Record data — 310

Process data — 320

Determine height — 330

340

Y — Images remaining? — 340

N

End

## FIG. 3

Measure area

## FIG. 4

FIG. 5

**FIG. 6**

Method
700

```
┌──────────┐
│  Start   │
└────┬─────┘
     │
     ▼
┌──────────────────┐
│   Record data    │───── 710
└────────┬─────────┘
         │
         ▼
┌──────────────────┐
│   Process data   │───── 720
└────────┬─────────┘
         │
         ▼
┌──────────────────────┐
│ Classify luminaires  │───── 730
│ and housing          │
│ structures           │
└────────┬─────────────┘
         │
         ▼
┌──────────────────┐
│ Provide feedback │───── 740
└────────┬─────────┘
         │
         ▼
   ┌──────────┐
   │   End    │
   └──────────┘
```

# FIG. 7

Comparing matching points

Putatively matched points

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1953568 A